# EUROPEAN PATENT APPLICATION

(11) **EP 3 321 219 A1**
(43) Date of publication of application: **16.05.2018**
(21) Application number: 17382760.1
(22) Date of filing: 10.11.2017
(51) Int. Cl.: B65G 57/30

(54) **A MACHINE THAT STACKS-PALLETISES A SERIES OF BOXES AND A METHOD FOR STACKING AND PALLETISING THAT SERIES OF BOXES**

(30) Priority: 10.11.2016 ES 201631429
(71) Applicant: Sinter Ibérica Packaging, S.A., 09007 Burgos (ES)
(72) Inventor: MARTÍNEZ MARTÍN, Jesús, 09007 Burgos (ES); CARRERA MORENO, Jose Manuel, 09007 Burgos (ES); ROMERO PÉREZ, Mariano, 09007 Burgos (ES); DE LAMA ARENALES, Mario, 09007 Burgos (ES)
(74) Representative: Elzaburu S.L.P.

(57) **Abstract**

A machine that stacks-palletises (100) a series of boxes (6) that consists of a stacking module (1) designed to stack boxes (6) until the stack (7) reaches the desired size; a palletising module (2) designed to palletise; a stacking and conveyance trolley (3) designed to receive boxes (6), stack them, and convey the stacks (7) from the stacking module (1) to the palletising module (2); and a stacking surface (9) located in the stacking module (1). The stacking and conveyance trolley (3) is located on the stacking surface, and the stacking surface (9) is designed to receive boxes (6) and serve as a box (6) stacking support once the stacking and conveyance trolley (3) is extracted from the stacking module (1) to facilitate continuous and more productive stacking.

## Description

A machine that stacks-palletises a series of boxes and a method for stacking and palletising that series of boxes.

### Field of the invention

This invention concerns a stacking and palletising machine that provides a system for stacking and palletising a series of stackable boxes in a confined space.

### Background of the invention

In prior art, there are row-forming and layer-forming systems for stacking and subsequently palletising pallets, where loads are arranged in row-forming areas then moved to different areas where layer forming takes place, until the pallet is complete.

In general, all of these processes are designed for specific types of boxes that can only stack very small variations of the intended types.

Stacking processes may involve applying pressure to an entire row, making the boxes very resistant to damage.

In the current state of art, stacking is done on the conveyor that transports the boxes. Therefore, stacking cannot be carried out while the stacks are being transferred from the conveyor to the following processes, so the transport of boxes must stop, which may also halt any prior processes, such as filling boxes, with the consequent decrease in productivity.

### Description of the invention

The stacking-palletising machine is designed to stack and palletise boxes originating from different production processes that must be stacked. The boxes to be stacked can be, for example, 600 mm long by 400 mm wide, or 300 mm long by 400 mm wide, with a tolerance of 10 mm, these being the most common stackable boxes in the industry. In addition, preferably the height of the boxes will be identical within the same batch to be palletised, though it may vary between batches.

This stacking-palletising machine consists of two main modules: a stacking module and a palletising module. However, the stacking-palletising machine may also include a positioning module that positions boxes as they arrive manually or by conveyor and arranges them perfectly in order to be introduced into the stacking module or other intermediate module. To insert boxes into the stacking module, the stacking-palletising machine may also consist of an automatic box insertion module that positions the boxes perfectly for immediate stacking. Lastly, though not to be interpreted restrictively, the stacking-palletising machine may include an automated pallet feeder system that feeds empty pallets to the palletising module and extracts pallets once palletised.

The machine that stacks and palletises a series of boxes consists of:
- a stacking module that includes a lifting platform outfitted for elevation and configured to stack boxes underneath one another until the stack reaches the desired size;
- a stacking and conveyance trolley designed to receive boxes, stack them, and convey the stacks from the stacking module to the palletising module;
- a palletising module adjacent to the stacking module designed to receive at least one stack of boxes for palletising and adapted to receive the pallets on which the stacks of boxes are deposited;
- a stacking surface intended to receive the boxes located in the stacking module.

The stacking and conveyance trolley is configured to be located on the stacking surface in the stacking module to receive boxes and to serve as a stacking area. The stacking surface is configured to receive boxes and serve as a box stacking support once the stacking and conveyance trolley has been extracted from the stacking module to move the stack of boxes to the palletising module for continuous stacking.

The stacking module creates stacks of boxes from the set of boxes it receives. It is also capable of stacking a single box, which is useful when, having reached the end of the pallet, a given stack has one less box than another.

The boxes are introduced successively into the stacking module manually or by an insertion system that pushes them onto one of two possible surfaces: the stacking and conveyance trolley that can move forward or backward as the boxes advance, or the stacking surface that, according to priority but not exclusively, supports the stacking module. Initially, the stacking and conveyance trolley is situated within the stacking module in its rearmost position and serves as a surface on which to deposit boxes, but during manoeuvring to extract stacks, the stacking and conveyance trolley advances to remove the stacks of boxes from the stacking module. The stacking surface, which is at a lower level, is then responsible for receiving the boxes and providing an area for stacking. In this way, the boxes can continue to enter the stacking module even if the stacking and conveyance trolley is not in its starting position. Both the stacking and conveyance trolley and the stacking surface may have some open recesses to permit the insertion of mobile stacking elements when lifting is required in order to stack the boxes from the bottom.

The stacking module has a lifting platform operated by an elevation system. Among other elements, this lifting system may consist of electric motors that move the lifting platform vertically on rails fixed to the stacking module.

The method of stacking and palletising a series of boxes consists of the following steps:
- stacking of the boxes introduced into a stacking module until obtaining at least one stack of boxes of the desired size. The stacking module stacks the boxes on a stacking and conveyance trolley or on a stacking surface if the stacking and conveyance trolley is not in its starting position;
- movement of the stacking and conveyance trolley, once it contains the desired number of stacks, to the palletising module to begin the palletising process;
- introduction of a pallet into the palletising module;
- introduction of the stacking and conveyance trolley into the palletising module, so the stacks of boxes are positioned atop the pallet;
- withdrawal of the stacking and conveyance trolley from the palletising module to the stacking module, such that the stacks of boxes are deposited on the pallet until it is completely palletised and ready for subsequent extraction;
- movement of the stacking and conveyance trolley from the palletising module to the stacking module in order to return to its starting position.

The stacking module forms stacks by lifting the first box or stack of boxes and lowering it onto the new box entering the stacking module. This system is faster and simpler than keeping the entire stack elevated and suspended by a retention mechanism while another system lifts each new box onto the stack. Thus, when depositing the first box or stack of boxes directly onto the new incoming box, the iteration of the stacking process immediately ends. Moreover, only one device is needed to elevate and retain the box or stack of boxes, eliminating the need for a specific system to retain the stack of boxes and another to elevate the boxes to the top of the stack.

The palletising module is adjoined to the stacking module in the direction in which the boxes and stacks advance, connected by the stacking and conveyance trolley that circulates between the stacking module and the palletising module. The advantages of using the stacking and conveyance trolley are several.

First, the stacking and conveyance trolley is combined with a fixed stacking surface located in the stacking module below the stacking and conveyance trolley. Once the boxes are stacked on the stacking and conveyance trolley, it can convey the stacks of boxes to the palletising module without stopping the stacking process in the stacking module because the stacking surface acts as a support wherein stacking can continue until the stacking and conveyance trolley returns to its starting position.

The use of the stacking and conveyance trolley to stack and later palletise is very advantageous when lifting boxes and creating stacks of boxes.

### Brief description of the drawings

To complete the description and to provide a better understanding of the invention, a set of drawings is included. These drawings form an integral part of the description and illustrate the preferred embodiment of the invention. The drawings include the following figures:
Figure 1 shows a perspective view of the exemplary embodiment of the stacking-palletising machine.
Figure 2.A shows a frontal view of the stacking module from the exemplary embodiment of figure 1.

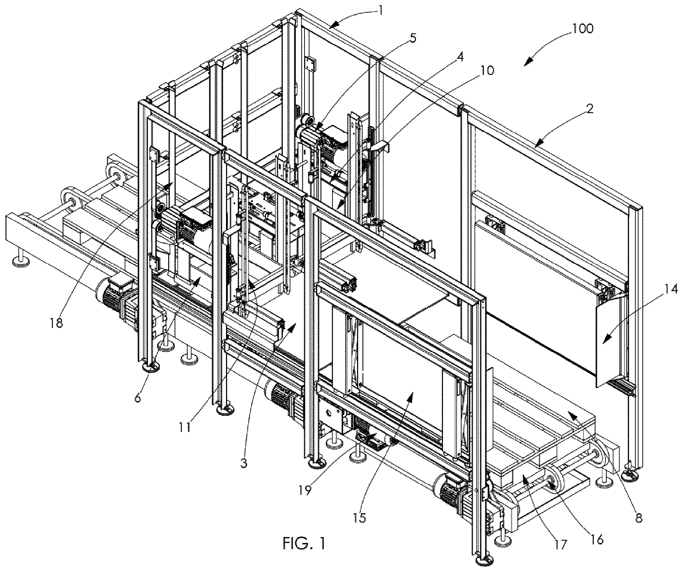

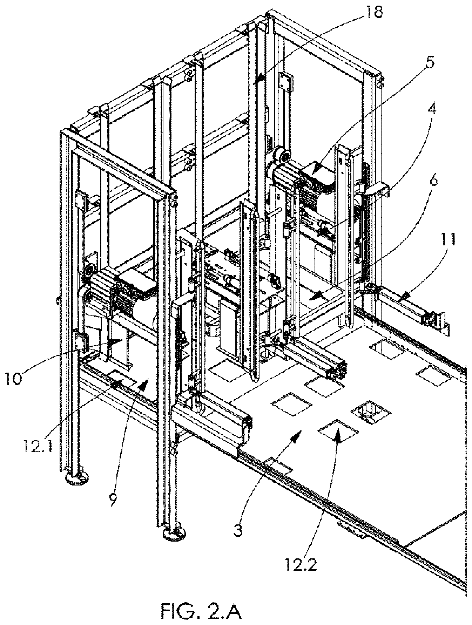

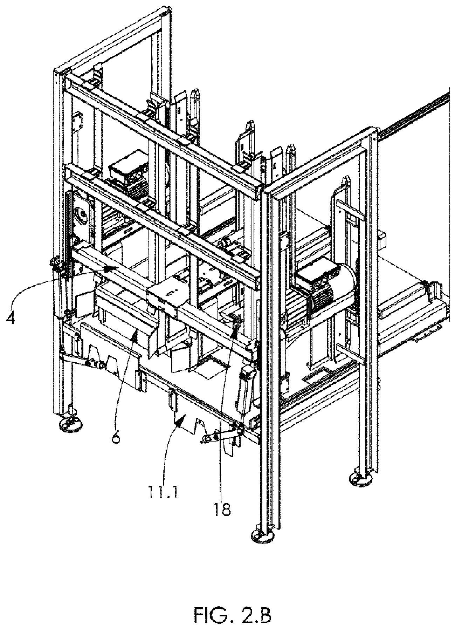

Figure 2.B shows a rear view of the stacking module from the exemplary embodiment of figure 1.

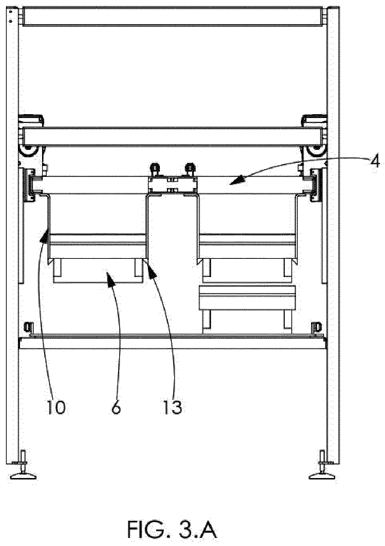

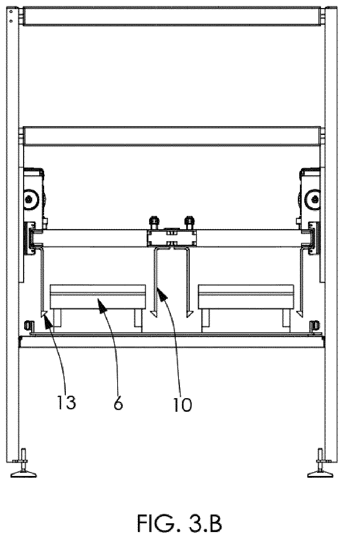

Figures 3.A and 3.B show a section of the embodiment depicted in figure 1 of the stacking module, illustrating the positions of the mobile stacking elements when closed on the protruding surfaces of a standard box and the positions of the mobile stacking elements when open.

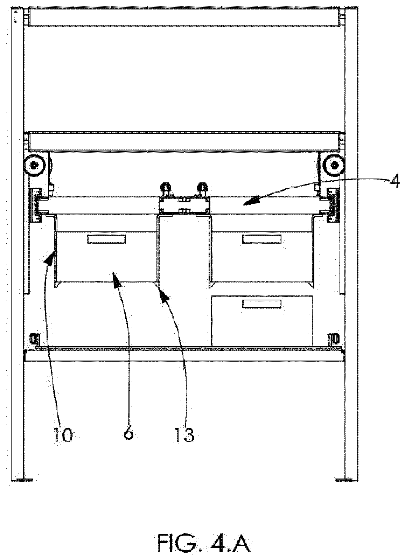

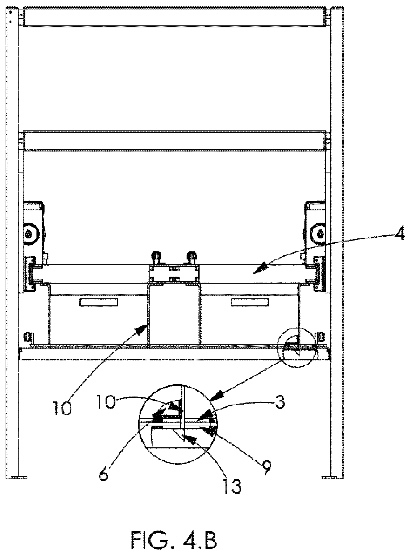

Figures 4.A and 4.B show a section of the stacking module from the exemplary embodiment of figure 1 illustrating the gripping of the boxes from underneath by introducing mobile stacking elements into the recesses of both the stacking and conveyance trolley and the stacking surface. Figure 4.B also shows in detail an enlargement of the protrusions illustrating the gripping of the boxes from underneath.

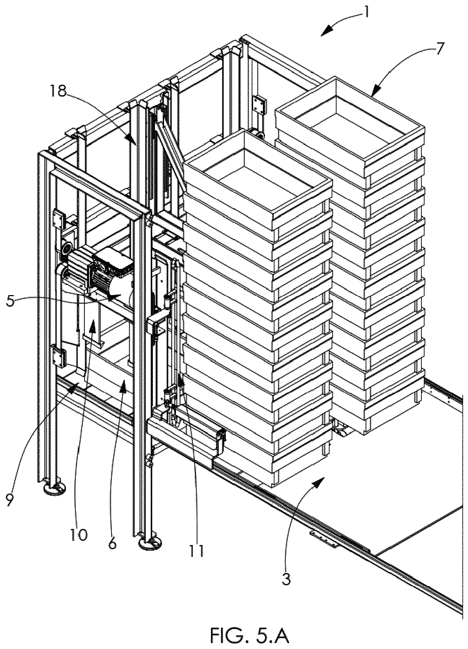

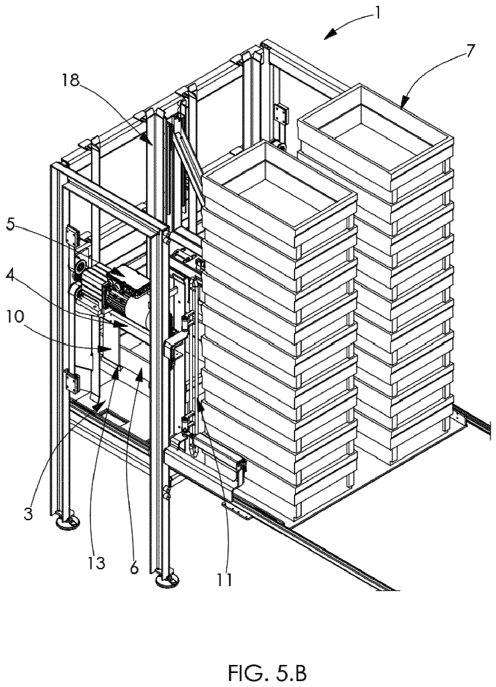

Figures 5.A and 5.B show a perspective view of the stacking module from the exemplary embodiment of figure 1 illustrating how the front stops of the stacking module move the stacks of boxes on the stacking and conveyance trolley to allow for the creation of new stacks of boxes on that stacking and conveyance trolley.

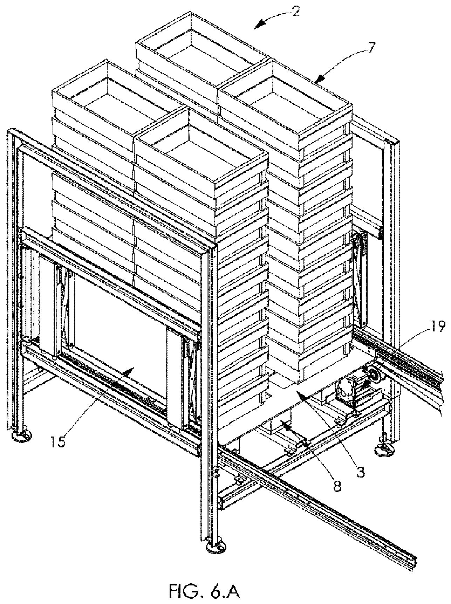

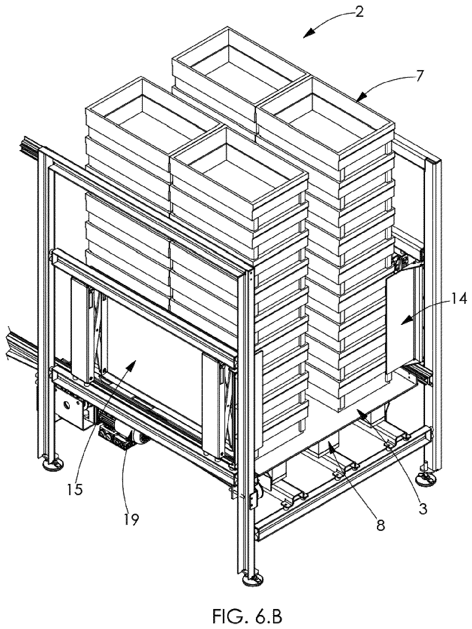

Figures 6.A and 6.B show a perspective view of the palletising module from the exemplary embodiment of figure 1 with the palletising module stop blocking the stacks of boxes, as the stacking and conveyance trolley is inserted into the palletising module.

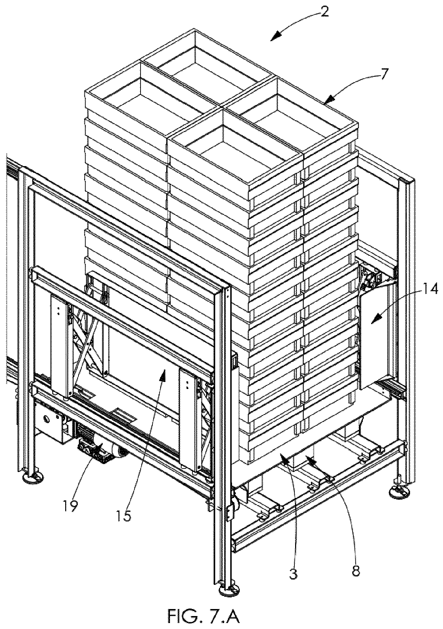

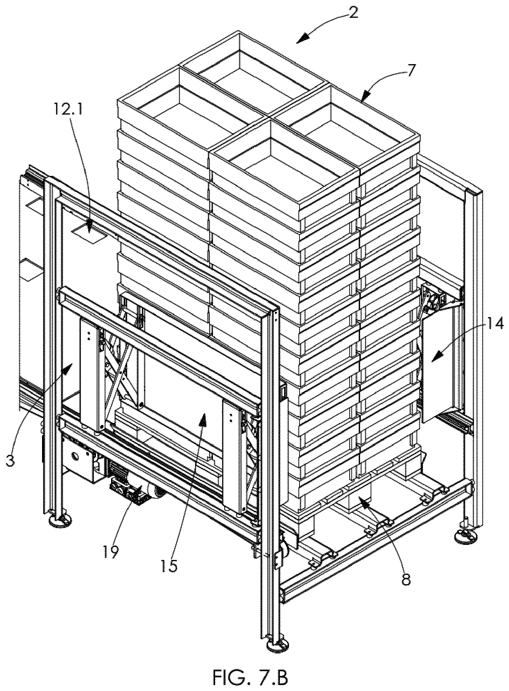

Figures 7.A and 7.B show a perspective view of the palletising module from the exemplary embodiment of figure 1 with the lateral thrusters in the advanced position, such that they compress and block the stacks of boxes and illustrate the stacking and conveyance trolley's removal of the stacks of boxes on the pallet.

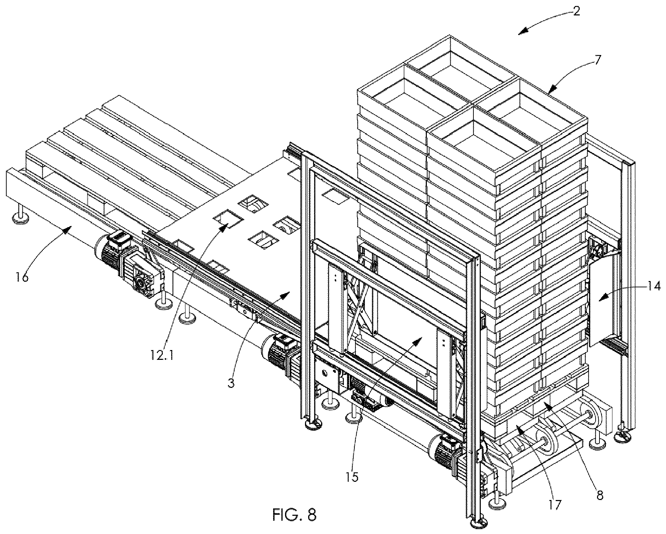

Figure 8 shows a perspective view of the palletising module from the exemplary embodiment of figure 1 in conjunction with an automated pallet feeder system wherein the stacks of boxes have already been placed on the pallet.

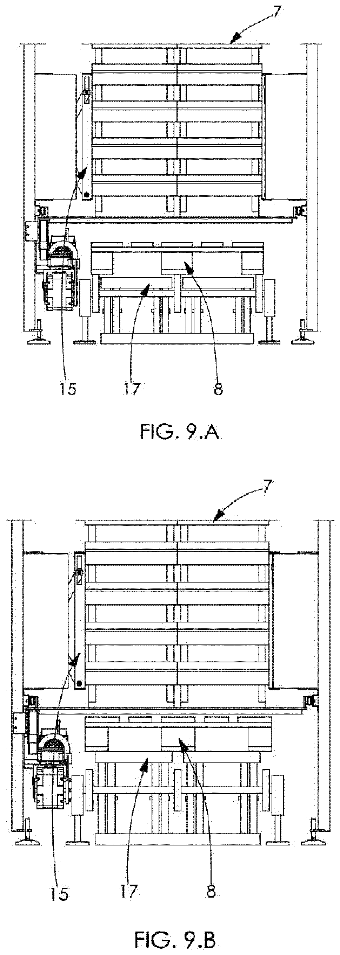

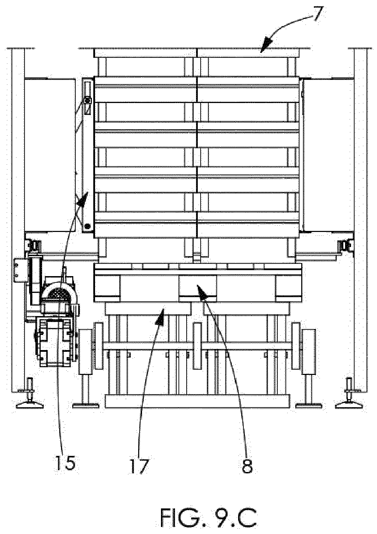

Figures 9.A, 9.B and 9.C show sectional views of the palletising module from the exemplary embodiment of figure 1 featuring an automated pallet feeder system and in which the pallet elevator, located below the palletising module, can be seen. The elevator lifts the pallet, immediately situating it underneath the stacking and conveyance trolley, and then deposits the stacks of boxes on the pallet.

### Preferred embodiment of the invention

Figure 1 shows the different modules and components of the stacking-palletising machine (100). Note the detailed embodiment of the stacking module (1) and, following that, the palletising module (2). Also shown is the stacking and conveyance trolley (3), which serves as both the stacking surface and transports the stacks of boxes (7) to the palletising module (2).

Figures 2.A and 2.B show the preferred embodiment of the stacking module (1). This stacking module (1) is configured so that the lifting platform (4), which is operated by an elevation system (5), lifts the box (6) or stack of boxes (7) and places them atop a new incoming box (6). The lifting platform (4) includes at least two mobile stacking elements (10) that, by means of pneumatic cylinders or other conveyance elements, can be opened or closed at a given level until making contact with the box (6) in a direction perpendicular to the advance of that box (6). In the lower section of the mobile stacking elements (10), also shown in figures 3.A, 3.B, 4.A and 4.B, the protruding elements (13) are visible. These may be mechanised parts, shaped like a triangular-based prism, that help create a horizontal angle to grip the box (6) during elevation and, once in position, keep the stacks of boxes (7) elevated. At the same time, the tilted angle of the protrusion's prism (13) ensures that the distance at which the stack of boxes (7) is left on the new box (6) is as small as possible to prevent damaging the new box (6) beneath the stack of boxes (7). More than a single protrusion (13) could be placed in each mobile stacking element (10) to raise one box (6), or two boxes (6) whose lengths are half that of the first box (6).

Figure 2.B shows that the stacking module (1) may include rear stops (11.1), pneumatic or otherwise, that prevent the boxes from entering the stacking module (1) during stacking manoeuvres. As soon as the stacking module (1) needs another box (6), these rear stops (11.1) retract by means of an actuator (a pneumatic cylinder, perhaps) clearing the passage for the entrance of another box (6) in the stacking module (1).

The stacking module (1) may also include front stops (11), as shown in figure 2.A. These front stops (11), pneumatic or otherwise, perform two key functions:
- firstly, they establish the correct position of the box (6) so it remains plumb with the remaining stack of boxes (7), and at the same time they serve as guides as the boxes (6) advance to form a stack (7).
- secondly, as illustrated in figures 5.A and 5.B, once the first stacks of boxes (7) for transfer to the pallet (8) are formed, the front stops of the stacking module (11) retract, allowing the stacks to exit when the stacking and conveyance trolley (3) is in place. Once the stacks (7) pass the front stops of the stacking module (11), the stops are closed and the stacking and conveyance trolley (3) reverses; the first stacks of boxes (7) also reverse direction, halting at the front stops of the stacking module (11) as the stacking and conveyance trolley (3) continues in reverse until reaching its starting position. Thus, the stacks of boxes (7) are moved to the front of the stacking and conveyance trolley (3) to allow the formation of new stacks of boxes (7) in the rear of the stacking and conveyance trolley (3), which is back in its starting position. At the same time, the front stop of the stacking module (11) separates the already-formed stacks of boxes (7) from the new stacks of boxes (7) being formed to prevent interference with the stacking process.

In an effort to perfect the stacking of boxes (6), the stacking module (1) may also include additional support rails (18), both vertical and horizontal, that function as positioning elements during stacking and that fix the stacks of boxes (7) to guide them seamlessly through the stacking (7) and conveyance once extracted from the stacking module (1).

Figure 2.A also shows the preferred embodiment of the stacking trolley. The stacking and conveyance trolley (3) consists of a plate with rollers on the sides that move along the rails, fixed to the stacking-palletising machine (100), allowing them to roll from the stacking module (1) to the palletising module (2). By priority, this movement is facilitated by a drive system (19), which may be an electric motor that moves the stacking and conveyance trolley (3) in both directions through a system of belts and pulleys. On the stacking and conveyance trolley (3) plate, recesses (12.2) can be opened to insert mobile stacking elements (10), such as mechanical claws, which lift the boxes (6) underneath them, as shown in figures 4.A and 4.B. These mobile stacking elements (10) can be programmed to grip the boxes (6) anywhere, from the bottom of the box (6) to the top, as illustrated in figures 3.A and 3.B, thereby facilitating the stacking of several types of boxes (6) without having to make any mechanical adjustments in the lifting system (4).

In addition, the plate surface of the stacking and conveyance trolley (3) can move the first stacks of boxes (7) formed from the rearmost position on the stacking and conveyance trolley (3) to the foremost position. To do so, the use (closing and retracting) of the stacking module's front stops (11) is combined with the movement of the stacking and conveyance trolley (3), as illustrated in figures 5.A and 5.B, to move the stacks of boxes (7) along the stacking and conveyance trolley (3).

The stacking surface (9), shown in figure 2.A, located in the stacking module (1) may include recesses (12.1 ) to facilitate the insertion of protruding elements (13) below the lifting surface of the boxes (6) or stacks of boxes (7), as also shown in figure 4.B.

Figures 6.A and 6.B show the stacking and conveyance trolley (3) loaded with stacks of boxes (7) in the palletising module (2). Figure 6.B shows the palletising module stops (14) positioned to halt the advance of the stacks of boxes (7) once the stacking and conveyance trolley (3) is in the palletising module (2), and therefore, merging the stacks of boxes (7) situated on the stacking and conveyance trolley (3) along the conveyance axis of the stacking and conveyance trolley (3).

Figures 7.A and 7.B show the preferred embodiment of removing the stacks of boxes (7) on a pallet (8). Once the stacking and conveyance trolley (3) stops, the lateral thrusters (15), which may be pneumatic clamps situated on the sides of the palletising module (2), apply pressure to the sides of the stacks of boxes (7), moving them perpendicular to the advance until the stacks of boxes (7) are situated on top of the pallet (8) previously inserted into the palletising module (2) manually or automatically.

In addition, figures 7.A and 7.B also show the retreat of the stacking and conveyance trolley (3) and the removal of the stacks of boxes (7) on the pallet (8). Due to the lateral thrusters on the palletiser (15), the stacks of boxes (7) remain in a fixed position given the pressure exerted on them (7) by the thrusters (15) in the first place. Thus, the palletised stacks of boxes (7) remain very compact.

The stacking-palletising machine (100) may include the automated pallet feeder module (16), shown in figure 1 and more clearly in figure 8, designed to feed pallets (8) to the palletising module (2) and to extract fully stocked pallets (8) from the palletising module (2).

Figures 9.A, 9.B and 9.C show the automated pallet feeder module (16), which also includes a pallet elevator (17), a pneumatic clamping mechanism designed to lift pallets (8) from the feeder module (16) to a receiving position on the stack of boxes (7), so that the stack of boxes (7) can be deposited without unduly disturbing the balance.

## Claims

1. A machine that stacks and palletises (100) a series of boxes (6), that consists of:
- a stacking module (1), including a lifting platform (4) outfitted for elevation and configured to stack boxes (6), one under another, until the stack (7) reaches the desired size;
- a stacking and conveyance trolley (3) designed to receive boxes (6), stack them, and convey the stacks (7) from the stacking module (1) to the palletising module (2);
- a palletising module (2) adjacent to the stacking module (1) designed to receive at least one stack of boxes (7) for palletising and adapted to receive the pallets (8) on which the stacks of boxes are deposited (7);
- a stacking surface (9) configured to receive the boxes (6) located in the stacking module (1);
**characterised by:**
- the stacking and conveyance trolley (3) is configured to be located on the stacking surface (9) in the stacking module (1), and
- the stacking surface (9) is configured to receive boxes (6) and serve as a box stacking support (6) while the stacking and conveyance trolley (3) is extracted from the stacking module (1) to move the stacks of boxes (7) to the palletising module (2) for continuous stacking (6);

2. A machine that stacks-palletises (100) a series of boxes (6) in accordance with claim 1, **characterised by** a stacking module (1) designed so that the lifting platform (4) elevates the box (6) or stack of boxes (7) to place them atop a new incoming box (6);

3. A machine that stacks-palletises (100) a series of boxes (6) in accordance with any of the previous claims, **characterised by** a lifting platform (4) that includes at least two mobile stacking elements (10) designed to open and close around the boxes (6) in order to grip them (6);

4. A machine that stacks-palletises (100) a series of boxes (6) in accordance with any of the previous claims, **characterised by** the lower section of the mobile stacking elements (10), consisting of at least one protruding element (13) shaped like a prism and designed to provide a horizontal angle to grip the boxes (6) during elevation and a tilted angle (relative to the horizontal angle) to prevent damaging the lower box (6) during stacking;

5. A machine that stacks-palletises (100) a series of boxes (6) in accordance with claim 4, **characterised by** a stacking surface (9) that includes recesses (12.1) to enable the insertion of the protrusions (13) located on the mobile stacking elements (10) below the lifting surface of the boxes (6) or stacks of boxes (7);

6. A machine that stacks-palletises (100) a series of boxes (6) in accordance with claim 4, **characterised by** a stacking and conveyance trolley (3) that includes recesses (12.2) to enable the insertion of the protrusions (13) located on the mobile stacking elements (10) below the lifting surface of the boxes (6) or stacks of boxes (7);

7. A machine that stacks-palletises (100) a series of boxes (6) in accordance with any of the previous claims, **characterised by** a stacking module (1) that includes at least one rear stop (11.1) designed to prevent the boxes (6) from entering the stacking module (1) during stacking manoeuvres and to allow the boxes (6) access to the stacking module (1) once stacking manoeuvres are complete;

8. A machine that stacks-palletises (100) a series of boxes (6) in accordance with any of the previous claims, **characterised by** a stacking module (1) that includes at least one front stop (11) designed to fix the position of the new box (6) to be stacked by means of actuators that shift the front stop of the stacking module (11) and to keep the stacks of boxes (7) in a fixed position while the stacking and conveyance trolley (3) returns to its starting position in the stacking module (1), changing the relative position of the stacks of boxes (7) in relation to the stacking and conveyance trolley (3);

9. A machine that stacks-palletises (100) a series of boxes (6) in accordance with claim 6, in which the front stop of the stacking module (11) is also designed to keep the stacks of boxes (7) situated outside the stacking module (1) separate from the stacks of boxes (7) that are stacked in the stacking module (1);

10. A machine that stacks-palletises (100) a series of boxes (6) in accordance with any of the previous claims, **characterised by** a stacking module (1) comprised both vertical and horizontal support rails (18) designed as positioning elements during stacking and that guide the stacks of boxes (7) seamlessly through stacking and conveyance once extracted from the stacking module;

11. A machine that stacks-palletises (100) a series of boxes (6) in accordance with any of the previous claims, **characterised by** a palletising module (2) that consists of at least one stop on the palletising module (14) designed to retain the stacks (7) depending on the movement of the stacking and conveyance trolley (7);

12. A machine that stacks-palletises (100) a series of boxes (6) in accordance with any of the previous claims, **characterised by** a palletising module (2) that consists of at least one lateral thruster (15) on each side of the palletising module (2) designed to compress the stacks of boxes (7) perpendicular to the advance of the stacking and conveyance trolley (3) and configured to hold the stacks of boxes (7) in an absolutely fixed position while the stacking and conveyance trolley (3) withdrawals toward the stacking module (1), and adapted to deposit the stacks of boxes (7) on the pallet (8) located in the palletising module (2) at a level lower than that of the stacks of boxes (7);

13. A machine that stacks-palletises (100) a series of boxes (6) in accordance with any of the previous claims, **characterised by** a pallet feeder module (16) designed to feed pallets (8) to the palletising module (2) and to extract fully stocked pallets (8) from the palletising module (2);

14. A machine that stacks-palletises (100) a series of boxes (6) in accordance with any of the previous claims, **characterised by** a pallet feeder module (16) that includes a pallet elevator (17) designed to lift pallets (8) from the feeder module (16) to a receiving position on the stack of boxes (7).

15. The method of stacking and palletising a series of boxes consists of the following steps:
a. stacking of boxes introduced into a stacking module (1) until obtaining at least one stack of boxes (7) of the desired size. The stacking module (1) stacks the boxes on a stacking and conveyance trolley (3) or on a stacking surface (9) if the stacking and conveyance trolley (3) is not in its starting position;
b. movement of the stacking and conveyance trolley (3) once it contains the desired number of stacks (7) to the palletising module (2) to begin the palletising process;
c. introduction of a pallet (8) into the palletising module (2);
d. introduction of the stacking and conveyance trolley (3) into the palletising module (2), so the stacks of boxes (7) are positioned atop the pallet (8);
e. withdrawal of the stacking and conveyance trolley (3) from the palletising module (2) to the stacking module (1), such that the stacks of boxes (7) are deposited on the pallet (8) until it is completely palletised and ready for subsequent extraction;
f. movement of the stacking and conveyance trolley (3) from the palletising module (2) toward the stacking module (1) in order to return to its starting position.
